# EUROPÄISCHE PATENTSCHRIFT

(11) **EP 2 735 220 B1**
(45) Veröffentlichungstag und Bekanntmachung des Hinweises auf die Patenterteilung: **13.07.2016**
(21) Anmeldenummer: 13188828.1
(22) Anmeldetag: 16.10.2013
(51) Int. Cl.: A01B 73/04, A01D 41/14, A01D 43/08

(54) **ZWISCHEN BETRIEBS- UND TRANSPORTSTELLUNG BEWEGBARER ERNTEVORSATZ**
HARVESTING HEADER MOVABLE BETWEEN AN OPERATIONAL AND A TRANSPORT POSITION
TÊTE DE RÉCOLTE MOBILE ENTRE UNE POSITION DE FONCTIONNEMENT ET UNE POSITION DE TRANSPORT

(30) Priorität: 21.11.2012 DE 102012221276
(43) Veröffentlichungstag der Anmeldung: 28.05.2014
(73) Patentinhaber: Maschinenfabrik Kemper GmbH & Co. KG, 48703 Stadtlohn (DE)
(72) Erfinder: Rathmer, Mike, 46354 Südlohn (DE)
(74) Vertreter: Holst, Sönke

(56) Entgegenhaltungen:
- EP-A1- 0 992 187
- EP-A1- 2 366 272
- DE-A1- 1 482 912
- DE-A1-102005 004 004

## Beschreibung

Die Erfindung betrifft einen Erntevorsatz mit:
einem Innenteil, der an einem Einzugsgehäuse einer Erntemaschine befestigbar und im Betrieb in einer Vorwärtsrichtung über ein Feld bewegbar ist und an dessen beiden seitlichen Enden Mittelteile um erste Achsen schwenkbar angelenkt sind,
und an beiden seitlichen Enden der Mittelteile um sich horizontal erstreckende, in Vorwärtsrichtung auseinanderlaufend abgewinkelte, zweite Achsen schwenkbar angelenkten Außenteilen,
wobei die Außenteile, Mittelteile und der Innenteil jeweils Rahmenabschnitte umfassen, an denen Schneid- und Einzugseinrichtungen zum Abschneiden und Abfördern von auf einem Feld stehendem Erntegut befestigt sind,
der Innenteil, die Mittelteile und die Außenteile sich in einer Betriebsstellung in einer horizontalen Ebene erstrecken
und zum Einfalten aus der Betriebsstellung in eine Transportstellung die Außenteile gegenüber den Mittelteilen um die zweiten Achsen nach oben und innen verschwenkbar sind und die Mittelteile gegenüber dem Innenteil um die ersten Achsen nach oben verschwenkbar sind.

### Stand der Technik

Landwirtschaftliche Erntemaschinen werden üblicherweise mit Erntevorsätzen ausgestattet, deren Breite die zulässige Transportbreite auf Straßen überschreitet. Sollen die Erntevorsätze nicht auf einem Anhänger hinter der Erntemaschine hergezogen werden, werden sie üblicherweise in eine Transportstellung eingefaltet.

Ein derartiger Erntevorsatz ist in der als gattungsbildend angesehenen EP 2 366 272 A1 beschrieben. Er setzt sich aus einem Innenteil zusammen, der an einem Einzugsgehäuse einer Erntemaschine befestigbar ist und an dessen beiden seitlichen Enden Mittelteile um sich in Vorwärtsrichtung erstreckende, horizontale erste Achsen schwenkbar angelenkt sind, während an beiden seitlichen Enden der Mittelteile Außenteile um sich horizontal erstreckende, in Vorwärtsrichtung um spitze Winkel auseinander laufend abgewinkelte, zweite Achsen schwenkbar angelenkt sind. Der Innenteil, die Mittelteile und die Außenteile erstrecken sich in einer Betriebsstellung koaxial zueinander in einer horizontalen Ebene. Zum Einfalten in eine Transportstellung sind die Außenteile gegenüber den Mittelteilen um etwa 180° um die zweiten Achsen nach oben und innen verschwenkbar und die Mittelteile gegenüber dem Innenteil um die ersten Achsen um etwa 90° nach oben verschwenkbar. In der Transportstellung erstrecken sich die Mittelteile somit vertikal vom seitlichen Ende des Innenteils nach oben und die Außenteile erstrecken sich vom oberen Ende des Mittelteils in Vorwärtsrichtung und schräg nach vorn und unten.

Dieser Erntevorsatz ist demnach in eine kompakte Transportstellung verschwenkbar. Da sich die Außenteile von den Mittelteilen nach vorn erstrecken und in Vorwärtsrichtung deshalb vor dem Mittelteilen und dem Innenteil angeordnet sind, liegt der Schwerpunkt dieses Erntevorsatzes relativ weit vorn. Dadurch werden die Vorderräder der ihn tragenden Erntemaschine verhältnismäßig stark belastet.

Die DE 1 482 912 A zeigt einen Mähdrescher mit einem zweiteiligen Erntevorsatz, dessen Teile um schräg nach vorn und oben orientierte Achsen in eine Transportstellung nach oben geschwenkt werden.

### Aufgabe

Das der Erfindung zugrunde liegende Problem wird darin gesehen, einen Erntevorsatz bereitzustellen, dessen Schwerpunkt in Transportstellung gegenüber dem Stand der Technik weiter nach hinten verlegt ist.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz umfasst einen Innenteil, der abnehmbar an einem Einzugsgehäuse einer Erntemaschine befestigt werden kann. Der Innenteil kann starr oder um eine sich in Vorwärtsrichtung erstreckende Pendelachse schwenkbar am Einzugsgehäuse befestigt werden. An beiden seitlichen Enden des Innenteils sind jeweils Mittelteile um nach oben und vorn geneigte, erste Achsen schwenkbar angelenkt. An beiden seitlichen Enden der Mittelteile sind jeweils Außenteile um sich horizontal erstreckende, zweite Achsen schwenkbar angelenkt. Die zweiten Achsen sind in Vorwärtsrichtung auseinanderlaufend abgewinkelt, divergieren somit in der horizontalen Ebene. Die Außenteile, Mittelteile und der Innenteil sind jeweils mit Rahmenabschnitten ausgestattet, an denen Schneid- und Einzugseinrichtungen zum Abschneiden und Abfördern von auf einem Feld stehendem Erntegut befestigt sind. Die Schneid- und Einzugseinrichtungen können als um vertikale Achsen rotierende Trommeln mit Aussparungen zur Aufnahme von Pflanzenstängeln und darunter angeordneten Schneidmessern oder als Endlosförderer ausgeführt sein. Der Innenteil, die Mittelteile und die Außenteile erstrecken sich in ihrer Betriebsstellung in einer gemeinsamen horizontalen Ebene. Um den Erntevorsatz in eine schmalere Transportstellung einzuklappen, werden die Außenteile gegenüber den Mittelteilen durch Aktoren um etwa 180° oder einen etwas kleineren Winkel um die zweiten Achsen nach oben und innen verschwenkt. Außerdem werden die Mittelteile durch Aktoren gegenüber dem Innenteil um die ersten Achsen um ca. 90° nach oben verschwenkt.

Durch die Neigung der ersten Achsen nach vorn und oben erreicht man, dass die Mittelteile sich in der Transportstellung (zumindest bereichsweise) von den ersten Achsen schräg nach hinten und oben erstrecken. Die an den seitlichen (in der Transportstellung oberen) Enden der Mittelteile angelenkten Außenteile erstrecken sich aufgrund der Position der zweiten Achsen vom oberen, hinteren Ende der Mittelteile nach vorn und unten. Dadurch erreicht man, dass die Außenteile und die Mittelteile gegenüber dem Stand der Technik weiter nach hinten versetzt werden, was den Schwerpunkt des Erntevorsatzes weiter nach hinten verlegt und es ermöglicht, die Arbeitsbreite der Außenteile gleich der Arbeitsbreite der Mittelteile oder sogar größer als letztere zu wählen.

Die ersten Achsen sind in Vorwärtsrichtung konvergierend abgewinkelt. Dadurch lassen sich Kollisionen zwischen den Rahmenabschnitten des Mittelteils und des Innenteils leichter vermeiden als bei in einer in Vorwärtsrichtung verlaufenden Ebene angeordneten ersten Achsen.

Die Schneid- und Einzugseinrichtungen liegen in der Transportstellung bei einer Verschwenkung der Außenteile gegenüber den Mittelteilen um einen Winkel von weniger als 180° in einer nach außen und unten geneigten Ebene, was die Sicht des Fahrers der Erntemaschine auf die Straße verbessert. Gleichzeitig sind die Außenteile dann in der Transportstellung, bei Betrachtung von oben, in Vorwärtsrichtung konvergierend abgewinkelt, was auch zur Sichtverbesserung beiträgt.

Bei einer Ausführungsform ist der Durchmesser aller Schneid- und Einzugseinrichtungen des Erntevorsatzes gleich und die Rahmenabschnitte sind in der Betriebsstellung koaxial zueinander angeordnet.

Bei einer anderen Ausführungsform ist der Innenteil mit Schneid- und Einzugseinrichtungen ausgestattet, deren Durchmesser größer als der Durchmesser der Schneid- und Einzugseinrichtungen der Mittel- und Außenteile ist, insbesondere doppelt so groß. Dabei liegen die Vorderkanten aller Schneid- und Einzugseinrichtungen auf einer Geraden. Der Innenteil und die Mittelteile weisen dann nach vorn abgewinkelte Bereiche der Rahmenabschnitte auf, zwischen denen die erste Achse angeordnet ist.

### Ausführungsbeispiel

In den Zeichnungen ist sind zwei nachfolgend näher beschriebenes Ausführungsbeispiele der Erfindung dargestellt. Es zeigt:
Fig. 1a eine Draufsicht auf eine erste Ausführungsform eines Erntevorsatzes in der Betriebsstellung,
Fig. 1b eine seitliche Ansicht des Erntevorsatzes der Figur 1 a mit einer Erntemaschine in der Betriebsstellung,
Fig. 2a, 2b: Ansichten entsprechend Figur 1a und 1b bei angehobenen Außenteilen,
Fig. 3a, 3b: Ansichten entsprechend Figur 1a und 1b bei komplett in die Transportstellung verbrachtem Erntevorsatz,
Fig. 4a eine Draufsicht auf eine zweite Ausführungsform eines Erntevorsatzes in der Betriebsstellung, und.
Fig. 4b eine seitliche Ansicht des Erntevorsatzes der Figur 4a mit einer Erntemaschine in der Betriebsstellung.

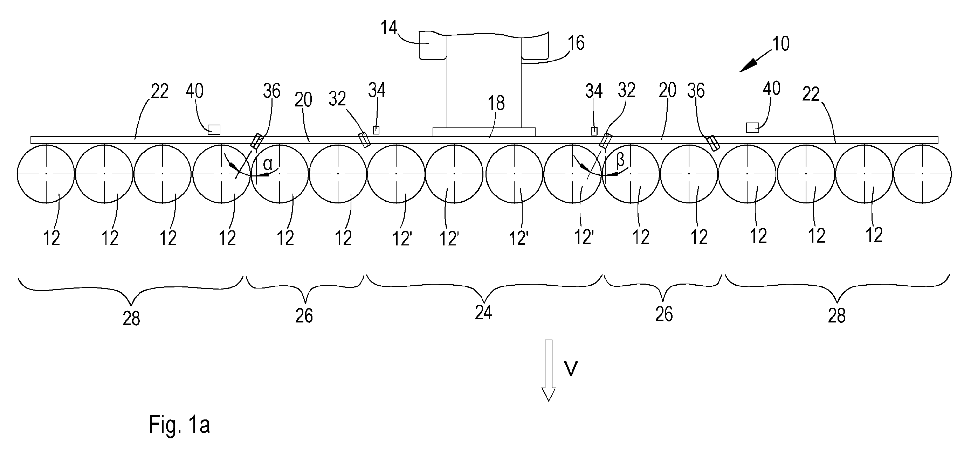

In den Figuren 1a bis 3b ist ein Erntevorsatz 10 in Form eines mit insgesamt sechzehn Schneid-und Einzugseinrichtungen 12,12' ausgestatteten Mähvorsatzes dargestellt, die alle denselben Durchmesser aufweisen. Im Einzelnen können die Schneid- und Einzugseinrichtungen 12, 12' einen üblichen Durchmesser von 0,75 m aufweisen.

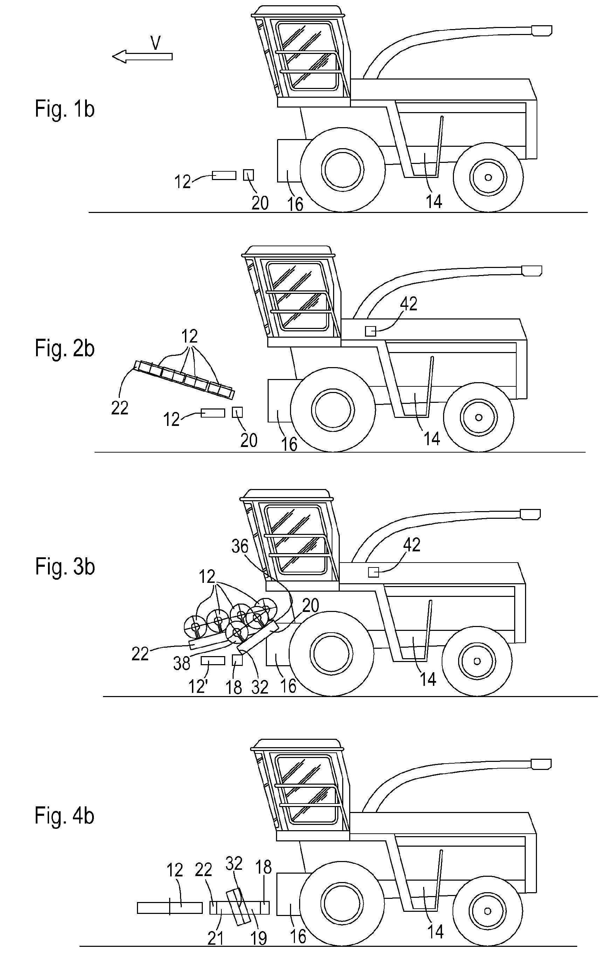

Die Schneid- und Einzugseinrichtungen 12 sind symmetrisch zu einer vertikalen Längsmittelebene des Erntevorsatzes 10 angeordnet und dienen zum Einziehen und Abschneiden von auf einem Feld stehenden Pflanzen. Die abgeschnittenen, eingezogenen Pflanzen werden in an sich bekannter Weise einem Einzugsgehäuse 16 einer an der Rückseite des Erntegeräts 10 angeordneten, den Erntevorsatz 10 tragenden und über ein Feld bewegenden Erntemaschine 14 zugeführt, die hier als Feldhäcksler ausgeführt ist und in den Figuren 1a und 1b in der Betriebsstellung gezeigt, in der sie beim Erntevorgang in einer Vorwärtsrichtung, die in der Figur 1 a nach unten und in der Figur 1b nach links verläuft, über ein Feld bewegt werden können. Im Folgenden beziehen sich Richtungsangaben, wie vorn, hinten, oben und unten auf die Vorwärtsrichtung V der Erntemaschine 14 und des Erntevorsatzes 10.

Der Erntevorsatz 10 umfasst insgesamt fünf Rahmenabschnitte 18, 20 und 22. Ein innerer Rahmenabschnitt 18 ist starr oder pendelnd am Einzugsgehäuse 16 befestigt und trägt die vier mittleren Schneid- und Einzugseinrichtungen 12'. An beiden seitlichen Enden des inneren Rahmenabschnitts 18 ist je ein mittlerer Rahmenabschnitt 20 angebracht, der zwei Schneid- und Einzugseinrichtungen 12 trägt. Außen an den mittleren Rahmenabschnitten 20 sind schließlich äußere Rahmenabschnitte 22 befestigt, die jeweils vier Schneid- und Einzugseinrichtungen 12 haltern. Der innere Rahmenabschnitt 18 mit den vier Schneid- und Einzugseinrichtungen 12' bildet einen Innenteil 24 des Erntevorsatzes 10. Die mittleren Rahmenabschnitte 20 mit den jeweils zwei Schneid- und Einzugseinrichtungen 12 bilden Mittelteile 26 des Erntevorsatzes 10. Die äußeren Rahmenabschnitte 22 mit den jeweils vier Schneid- und Einzugseinrichtungen 12 bilden Außenteile 28 des Erntevorsatzes 10. An den äußeren Enden der äußeren Rahmenabschnitte 22 können jeweils Stängelheberschnecken angebracht sein (nicht gezeigt), die auch entfallen könnten.

Alle Rahmenabschnitte 18, 20, 22 erstrecken sich in der in den Figuren 1a und 1b dargestellten Betriebsstellung horizontal und quer zur Vorwärtsrichtung.

Der Erntevorsatz 10 ist in der in den Figuren 1a und 1b dargestellten Betriebsstellung relativ breit. Um ihn auf einer öffentlichen Straße transportieren zu können, ohne ihn von der Erntemaschine 14 abzunehmen und zum Transport auf einem Anhänger abzulegen oder auf einem integrierten Fahrwerk hinter der Erntemaschine 14 herzuziehen, sind die mittleren Rahmenabschnitte 20 am inneren Rahmenabschnitt 18 um je eine erste nach vorn und innen abgewinkelte Achse 32 schwenkbar befestigt. Die Achsen 32 erstrecken sich somit unter einem Winkel β, der z.B. 45° betragen kann, gegenüber der Vorwärtsrichtung nach innen und konvergieren vor dem Erntevorsatz 10. Bei seitlicher Betrachtung (Figur 3b) sind die Achsen 32 nach vorn und oben geneigt. Die mittleren Rahmenabschnitte 20 können mittels eines Aktors 34 in Form eines Hydraulikzylinders um ca. 90° in eine Transportstellung verschwenkt werden, in der sie bei Betrachtung von vorn vertikal orientiert sind und bei seitlicher Ansicht der Rahmenabschnitt 20, der Getriebe 38 der Schneid- und Einzugseinrichtungen 12 des Mittelteils 26 haltert, sich schräg nach hinten und oben erstreckt (vgl. Figur 3b).

Auch die äußeren Rahmenabschnitte 22 sind um eine zweite, horizontale, mit der Vorwärtsfahrtrichtung V einen spitzen Winkel a, der vorzugsweise zwischen 30° und 45° liegt, einschließende Achse 36 um einen Winkel von näherungsweise 180° oder weniger, insbesondere ca. 150° bis ca. 190°, schwenkbar an den mittleren Rahmenabschnitten 20 angebracht. Die Achse 36 ist in einer hinreichenden Höhe über den Rahmenabschnitten 20 und 22 angebracht. Dadurch wird in der Transportstellung der nötige Abstand zwischen dem Mittelteil 26 und dem Außenteil 28 in Querrichtung hergestellt.

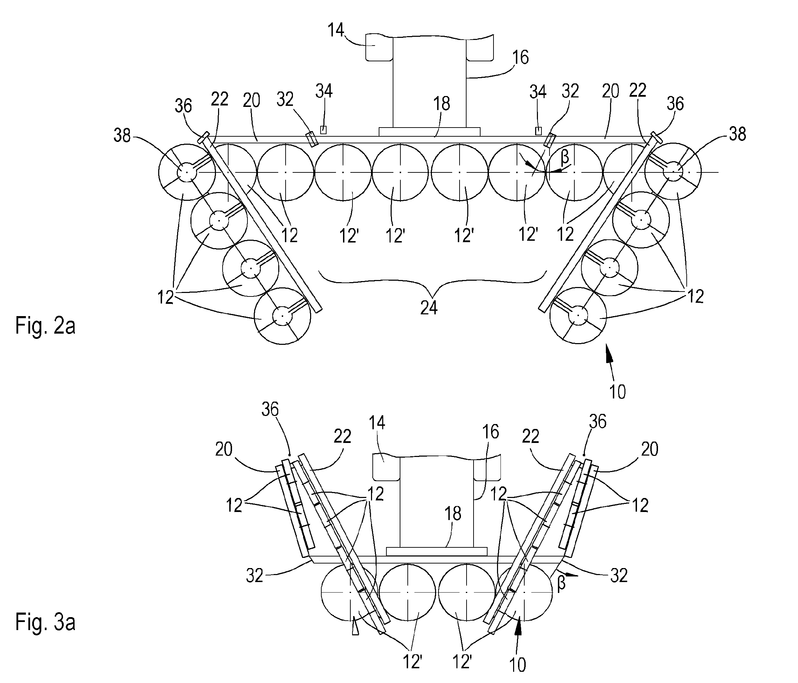

Die äußeren Rahmenabschnitte 22 können mittels eines Aktors 40 in Form eines Hydraulikzylinders in die Transportstellung verschwenkt werden. Die Steuerung der Aktoren 34 und 40 erfolgt mittels einer Steuerung 42 vorzugsweise derart, dass zunächst die beiden äußeren Rahmenabschnitte 22 von der Betriebs- in die Transportstellung verschwenkt werden (vgl. Figuren 2a, 2b). Danach werden die mittleren Rahmenabschnitte 20 beider Seiten angehoben. Das Absenken der mittleren Rahmenabschnitte 20 und der äußeren Rahmenabschnitte 22 in die Betriebsstellung erfolgt in umgekehrter Reihenfolge. Es ist aber auch denkbar, die Schwenkvorgänge aller Aktoren 34 und 40 gleichzeitig vorzunehmen. Falls die Schwenkwinkel 32 und 36 derart gewählt sind, dass Kollisionen zwischen den Außenteilen 22 möglich sind, wird zunächst ein Außenteil 22 angehoben, bevor dann der andere Außenteil 22 verschwenkt wird.

Aufgrund der in Vorwärtsrichtung V divergierenden Winkel a der Achsen 36 und der Schwenkwinkel der äußeren Rahmenabschnitte 22 um weniger als 180° um diese Achsen 36 erstrecken sich die äußeren Rahmenabschnitte 22 in der in Figur 2a dargestellten Zwischenstellung, in welcher die mittleren Rahmenabschnitte 20 sich noch in der Betriebsstellung befinden, von den Achsen 36 schräg nach vorn, innen und oben. Wegen des Schwenkwinkels von etwas unter 180° sind in der Draufsicht die Getriebegehäuse 38 der an den äußeren Rahmenabschnitten 22 angebrachten Schneid- und Einzugseinrichtungen 12 erkennbar. Die rückwärtigen Bereiche der Außenteile 28 befinden sich oberhalb der Mittelteile 26. Die Schneid- und Einzugseinrichtungen 12 der Außenteile 28 liegen (aufgrund des Winkels α und des Schwenkwinkels um weniger als 180° um die Achse 36) in einer schräg nach vorn und oben geneigten Ebene.

Werden nun auch die mittleren Rahmenabschnitte 20 in die Transportstellung gebracht, wie in den Figuren 3a und 4b dargestellt, sodass sie sich vom inneren Rahmenabschnitt 18 nach hinten, außen und oben erstrecken, sind die äußeren Rahmenabschnitte 22 von der Achse 36 schräg nach unten und vorn und nach vorn und innen orientiert. Die Schneid- und Einzugseinrichtungen 12 der Mittelteile 26 befinden sich in vertikalen Ebenen, die gegenüber der Vorwärtsrichtung V nach innen und vorn abgewinkelt sind, während die Schneid- und Einzugseinrichtungen 12 der Außenteile 28 sich in schräg nach unten und außen geneigten Ebenen befinden (vgl. Figur 3a und 3b), was dem Fahrer der Erntemaschine 14 eine gute Sicht bietet. Die Orientierung der äußeren Rahmenabschnitte 22 nach vorn und unten ermöglicht es, die Arbeitsbreite der Außenteile 28 größer als die Arbeitsbreite des Innenteils 24 (die durch die zulässige Breite bei einer Straßenfahrt begrenzt ist) und größer als die Arbeitsbreite der Mittelteile 26 (die durch die Einschränkung des Sichtbereichs für den Fahrer der Erntemaschine 14 begrenzt ist) zu wählen. Die nach vorn und oben geneigte Anordnung der Achsen 32 und die daraus folgende Ausrichtung der Mittelteile 26 nach hinten und oben in der Transportstellung verlagert den Schwerpunkt des Erntevorsatzes 10 gegenüber dem Stand der Technik nach hinten, während der Winkel β (vgl. Figur 1a) ein kollisionsfreies Schwenken um die Achse 32 erlaubt und die Mittelteile 26 während der Fahrt schräg nach außen anstellt.

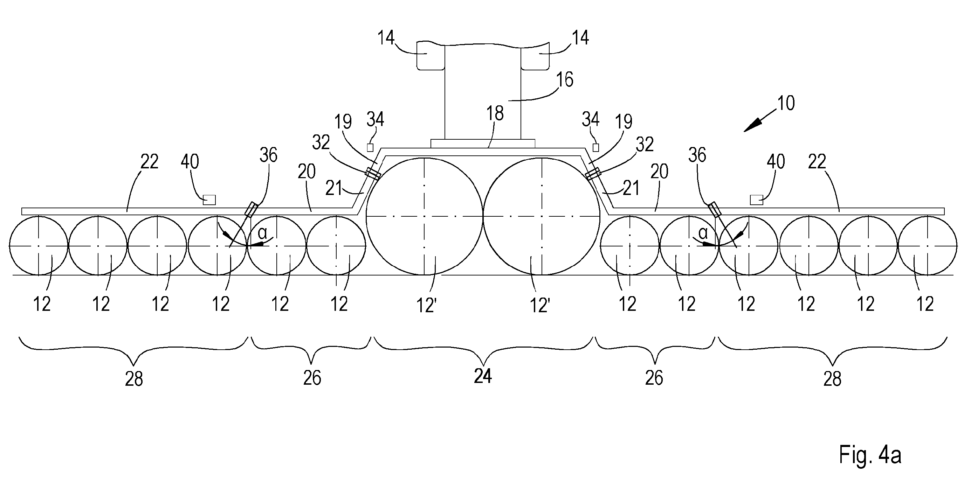

Eine zweite Ausführungsform der Erfindung ist in den Figuren 4a und 4b gezeigt. Mit der ersten Ausführungsform übereinstimmende Elemente sind mit denselben Bezugszeichen gekennzeichnet. Als wesentlicher Unterschied ist anzusehen, dass bei der zweiten Ausführungsform die mittleren zwei Schneid- und Einzugseinrichtungen 12' einen größeren (hier: doppelten) Durchmesser als die verbleibenden Schneid- und Einzugseinrichtungen 12 aufweisen. Im Einzelnen können die mittleren Schneid- und Einzugseinrichtungen 12' einen Durchmesser von 1,5 m aufweisen und die anderen Schneid- und Einzugseinrichtungen einen Durchmesser von 0,75 m.

Aufgrund des größeren Durchmessers der mittleren Schneid- und Einzugseinrichtungen 12' gegenüber den nach außen folgenden, kleineren Schneid- und Einzugseinrichtungen 12, deren Vorderkanten jedoch alle auf einer gemeinsamen, quer zur Vorwärtsrichtung orientierten Geraden liegen, umfasst der innere Rahmenabschnitt 18 außenseitig einen schräg nach vorn und außen abgewinkelten Bereich 19, an den sich ein ebenfalls schräg nach vorn und außen abgewinkelter Bereich 21 des mittleren Rahmenabschnitts 20 anschließt. Die erste Schwenkachse 32 ist hier zwischen den abgewinkelten Bereichen 19 und 21 angeordnet.

Die Funktionsweise der zweiten Ausführungsform ist mit jener der ersten Ausführungsform gleich. Durch Betätigen der Aktoren 40 werden die Außenteile 28 um etwas weniger als 180° um die zweiten Achsen 36 verschwenkt und die Mittelteile 26 werden danach oder gleichzeitig durch die Aktoren 34 um 90° um die ersten Achsen 32 verschwenkt, sodass sich in der Transportstellung eine den Figuren 3a und 3b entsprechende Situation ergibt.

## Patentansprüche

1. Erntevorsatz (10) mit:
einem Innenteil (24), der an einem Einzugsgehäuse (16) einer Erntemaschine (14) befestigbar und im Betrieb in einer Vorwärtsrichtung über ein Feld bewegbar ist und an dessen beiden seitlichen Enden Mittelteile (26) um erste Achsen (32) schwenkbar angelenkt sind,
und an beiden seitlichen Enden der Mittelteile (26) um sich horizontal erstreckende, in Vorwärtsrichtung auseinanderlaufend abgewinkelte, zweite Achsen (36, 36') schwenkbar angelenkten Außenteilen (28),
wobei die Außenteile (28), Mittelteile (26) und der Innenteil (24) jeweils Rahmenabschnitte (22, 20, 18) umfassen, an denen Schneid- und Einzugseinrichtungen (12, 12') zum Abschneiden und Abfördern von auf einem Feld stehendem Erntegut befestigt sind,
der Innenteil (24), die Mittelteile (26) und die Außenteile (28) sich in einer Betriebsstellung in einer horizontalen Ebene erstrecken
und zum Einfalten aus der Betriebsstellung in eine Transportstellung die Außenteile (28) gegenüber den Mittelteilen (26) um die zweiten Achsen (36) nach oben und innen verschwenkbar sind und die Mittelteile (26) gegenüber dem Innenteil (24) um die ersten Achsen (32) nach oben verschwenkbar sind,
**dadurch gekennzeichnet, dass** die ersten Achsen (32) nach vorn und oben geneigt sowie in Vorwärtsrichtung konvergierend abgewinkelt sind.

2. Erntevorsatz (10) nach Anspruch 1, **dadurch gekennzeichnet, dass** die Außenteile (28) gegenüber den Mittelteilen (26) um unter 180° liegende Winkel um die zweiten Achsen (36) in die Transportstellung schwenkbar sind.

3. Erntevorsatz (10) nach einem der vorhergehenden Ansprüche, **dadurch gekennzeichnet, dass** der Durchmesser aller Schneid- und Einzugseinrichtungen (12) des Erntevorsatzes (10) gleich ist und dass die Rahmenabschnitte (22, 20, 18) in der Betriebsstellung koaxial zueinander angeordnet sind.

4. Erntevorsatz (10) nach einem der Ansprüche 1 oder 2, **dadurch gekennzeichnet, dass** der Innenteil (24) mit Schneid- und Einzugseinrichtungen (12') ausgestattet ist, deren Durchmesser größer als der Durchmesser der Schneid- und Einzugseinrichtungen (12) der Mittel- und Außenteile (26, 28) ist, dass die Vorderkanten aller Schneid- und Einzugseinrichtungen (12, 12') auf einer Geraden liegen und dass der Innenteil (24) und die Mittelteile (26) Rahmenabschnitte (18, 20) mit nach vorn abgekröpften Bereichen (19, 21) aufweisen, zwischen denen die erste Achse (32) angeordnet ist.

5. Erntevorsatz (10) nach Anspruch 4, **dadurch gekennzeichnet, dass** die Schneid- und Einzugseinrichtungen (12') des Innenteils (24) den zweifachen Durchmesser der Schneid-und Einzugseinrichtungen (12) des Mittel- und Außenteils (26, 28) aufweisen.

## Claims

1. Harvesting header (10), with:
an inner part (24) which is fastenable to an intake housing (16) of a harvesting machine (14) and, during operation, is movable over a field in a forwards direction and to the two lateral ends of which central parts (26) are coupled pivotably about first axes (32),
and outer parts (28) that are coupled pivotably to the two lateral ends of the central parts (26) about horizontally extending second axes (36, 36') which are angled in a diverging manner in the forwards direction,
wherein the outer parts (28), central parts (26) and the inner part (24) respectively comprise frame sections (22, 20, 18) to which cutting and intake devices (12, 12') for cutting and conveying away crop standing in a field are fastened,
the inner part (24), the central parts (26) and the outer parts (28) extend in a horizontal plane in an operational position,
and, for folding from the operational position into a transport position, the outer parts (28) are pivotable upwards and inwards about the second axes (36) in relation to the central parts (26), and the central parts (26) are pivotable upwards about the first axes (32) in relation to the inner part (24),
**characterized in that** the first axes (32) are inclined forwards and upwards and are angled so as to converge in the forwards direction.

2. Harvesting header (10) according to Claim 1, **characterized in that** the outer parts (28) are pivotable in relation to the central parts (26) through angles below 180° about the second axes (36) into the transport position.

3. Harvesting header (10) according to either of the preceding claims, **characterized in that** the diameter of all of the cutting and intake devices (12) of the harvesting header (10) is identical, and **in that**, in the operational position, the frame sections (22, 20, 18) are arranged coaxially with respect to one another.

4. Harvesting header (10) according to either of Claims 1 and 2, **characterized in that** the inner part (24) is equipped with cutting and intake devices (12'), the diameter of which is larger than the diameter of the cutting and intake devices (12) of the central and outer parts (26, 28), **in that** the front edges of all of the cutting and intake devices (12, 12') lie on a straight line, and **in that** the inner part (24) and the central parts (26) have frame sections (18, 20) with regions (19, 21) which are offset forwards and between which the first axis (32) is arranged.

5. Harvesting header (10) according to Claim 4, **characterized in that** the cutting and intake devices (12') of the inner part (24) have twice the diameter of the cutting and intake devices (12) of the central and outer part (26, 28).

## Revendications

1. Tête de récolte (10) comprenant :
une partie interne (24) qui peut être fixée à un carter d'amenée (16) d'une moissonneuse (14) et qui peut être déplacée pendant le fonctionnement dans une direction d'avance sur un champ et au niveau des deux extrémités latérales de laquelle des parties centrales (26) sont articulées de manière à pouvoir pivoter autour de premiers axes (32),
et des parties externes (28) articulées de manière à pouvoir pivoter au niveau des deux extrémités latérales des parties centrales (26) autour de deuxièmes axes (36, 36') s'étendant horizontalement, inclinés de manière divergente l'un de l'autre dans la direction d'avance,
les parties externes (28), les parties centrales (26) et la partie interne (24) comprenant à chaque fois des portions de cadre (22, 20, 18) au niveau desquelles des dispositifs de coupe et d'amenée (12, 12') sont fixés pour couper et évacuer des produits de récolte se trouvant sur un champ,
la partie interne (24), les parties centrales (26) et les parties externes (28) s'étendant dans un plan horizontal dans une position de fonctionnement
et, pour le repliement de la position de fonctionnement dans une position de transport, les parties externes (28) pouvant pivoter vers le haut et vers l'intérieur par rapport aux parties centrales (26) autour des deuxièmes axes (36) et les parties centrales (26) pouvant pivoter vers le haut par rapport à la partie interne (24) autour des premiers axes (32),
**caractérisée en ce que** les premiers axes (32) sont inclinés vers l'avant et vers le haut et sont inclinés de manière à converger dans la direction d'avance.

2. Tête de récolte (10) selon la revendication 1, **caractérisée en ce que** les parties externes (28) peuvent pivoter dans la position de transport par rapport aux parties centrales (26) suivant des angles inférieurs à 180° autour des deuxièmes axes (36).

3. Tête de récolte (10) selon l'une quelconque des revendications précédentes, **caractérisée en ce que** le diamètre de tous les dispositifs de coupe et d'amenée (12) de la tête de récolte (10) est identique et **en ce que** les portions de cadre (22, 20, 18) sont disposées de manière coaxiale dans la position de fonctionnement.

4. Tête de récolte (10) selon l'une quelconque des revendications 1 ou 2, **caractérisée en ce que** la partie interne (24) est munie de dispositifs de coupe et d'amenée (12') dont le diamètre est supérieur au diamètre des dispositifs de coupe et d'amenée (12) des parties centrales et extérieures (26, 28), **en ce que** les arêtes avant de tous les dispositifs de coupe et d'amenée (12, 12') sont situées sur une droite et **en ce que** la partie interne (24) et les parties centrales (26) présentent des portions de cadre (18, 20) avec des régions coudées vers l'avant (19, 21), entre lesquelles est disposé le premier axe (32).

5. Tête de récolte (10) selon la revendication 4, **caractérisée en ce que** les dispositifs de coupe et d'amenée (12') de la partie interne (24) présentent le double diamètre des dispositifs de coupe et d'amenée (12) de la partie centrale et de la partie externe (26, 28).
